(19) Europäisches Patentamt
European Patent Office
Office européen des brevets

(11) **EP 4 703 077 A1**

(12) **EUROPÄISCHE PATENTANMELDUNG**

(43) Veröffentlichungstag:
04.03.2026 Patentblatt 2026/10

(21) Anmeldenummer: 24197566.3

(22) Anmeldetag: 30.08.2024

(51) Internationale Patentklassifikation (IPC):
**B23K 9/095** (2006.01)   **B23K 9/12** (2006.01)
**B23K 9/173** (2006.01)

(52) Gemeinsame Patentklassifikation (CPC):
**B23K 9/0953; B23K 9/125; B23K 9/173**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **EWM GmbH**
**56271 Mündersbach (DE)**

(72) Erfinder:
• **Huismann, Gerd**
**22045 Hamburg (DE)**

• **Held, Jan-David**
**57520 Friedewald (DE)**
• **Hartke, Martin**
**56299 Ochtendung (DE)**
• **Hoffmann, Frank**
**12487 Berlin (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(54) **DRAHTPOSITIONSGESTEUERTES KURZLICHTBOGENVERFAHREN**

(57)    Die Erfindung betrifft ein Verfahren zum Lichtbogenschweißen mit abschmelzender Drahtelektrode (152) umfassend eine Mehrzahl von Schweißzyklen (SZ), die jeweils eine Kurzschlussphase (KSP) und eine Lichtbogenphase (LBP) aufweisen, bei dem die Drahtelektrode (152) mit einer variablen Fördergeschwindigkeit ($v_F(t)$) gefördert wird und bei dem die Fördergeschwindigkeit ($v_F(t)$) und/oder der Schweißstrom ($I(t)$) abhängig von einem Wert ($x(t)$) für die aktuelle Position der Drahtelektrode (152) geändert wird, insbesondere geändert wird, wenn der Wert ($x(t)$) für die aktuelle Position der Drahtelektrode (152) eine vorgegebene Position ($x_C$, $x_D$) erreicht oder über- oder unterschreitet. Die Erfindung betrifft weiter eine Steuereinrichtung (114) für eine Schweißvorrichtung (100) sowie eine Schweißvorrichtung (100) mit einer solchen Steuereinrichtung (114).

Fig.3

**Beschreibung**

Die vorliegende Erfindung betrifft ein Verfahren zum Lichtbogenschweißen mit abschmelzender Drahtelektrode (Schweißdraht) umfassend eine Mehrzahl von Schweißzyklen, die jeweils eine Kurzschlussphase und eine Lichtbogenphase aufweisen. Die vorliegende Erfindung betrifft weiter eine Steuereinrichtung für eine Schweißvorrichtung sowie eine Schweißvorrichtung mit einer solchen Steuereinrichtung.

Lichtbogenschweißverfahren mit Schweißzyklen, die jeweils eine Kurzschlussphase und eine Lichtbogenphase aufweisen, sind grundsätzlich als sogenannte Kurzlichtbogenverfahren bekannt.

Die EP 1 563 938 B1 beschreibt zum Beispiel ein Kurzlichtbogenverfahren, bei dem gegen Ende der Kurzschlussphase eine Gegenspannung zugeschaltet wird, um Spritzer bei Kurzschlussauflösung zu vermeiden. Die EP 3 509 784 B2 beschreibt ebenfalls ein Kurzlichtbogenverfahren, bei dem vor der Kurzschlussauflösung eine Rückwärtsendgeschwindigkeit der Drahtelektrode erreicht wird.

Vielen bekannten Verfahren ist gemein, dass die Geschwindigkeit der Drahtelektrode abhängig vom Kurzschlusssignal der Schweißvorrichtung umgesteuert wird. Aufgrund ungleichmäßiger Kurzschlussdauern kommt es dadurch zu unterschiedlichen Wärmeeinträgen, die auch eine hohe Gleichmäßigkeit im Schweißprozess verhindern.

Vor diesem Hintergrund liegt der vorliegenden Erfindung die Aufgabe zu Grunde, ein Kurzlichtbogenverfahren, eine Steuereinrichtung für eine Schweißvorrichtung und eine Schweißvorrichtung zur Verfügung zu stellen, die einen besseren Schweißprozess ermöglicht, insbesondere Nachteile des Stands der Technik reduziert oder vermeidet.

Die zuvor genannte Aufgabe wird erfindungsgemäß gelöst durch ein Verfahren zum Lichtbogenschweißen mit abschmelzender Drahtelektrode umfassend eine Mehrzahl von Schweißzyklen, die jeweils eine Kurzschlussphase und eine Lichtbogenphase aufweisen, bei dem die Drahtelektrode mit einer variablen Fördergeschwindigkeit gefördert wird und bei dem die Fördergeschwindigkeit und/oder der Schweißstrom abhängig von einem Wert für die aktuelle Position der Drahtelektrode geändert wird, insbesondere geändert wird, wenn der Wert für die aktuelle Position der Drahtelektrode eine vorgegebene Position erreicht, insbesondere über- oder unterschreitet.

Auf diese Weise kann der Schweißprozess zum Beispiel abhängig vom Abstand der Drahtelektrode zum Schmelzbad (Schweißbad) gesteuert werden. Dies ermöglicht insbesondere eine Steuerung des Schweißprozesses mit Abstandsvorgaben. Auf diese Weise können verschiedene Schweißparameter, insbesondere Beschleunigung der Drahtelektrode oder Stromformung, abhängig von der Position der Drahtelektrode zum Schmelzbad gesteuert werden, wodurch zum Beispiel eine hohe Gleichmäßigkeit des Schweißprozesses erzielt werden kann, die Wärmeeinbringung in Kurzschluss- und/oder Lichtbogenphase gezielt gesteuert werden kann und/oder, je nach Anwendungsfall, minimale Eintauchtiefen der Drahtelektrode in das Schmelzbad und/oder gleichbleibende Lichtbogenlängen erreicht werden können. Weiterhin kann durch die Positionssteuerung der Tropfen an der Drahtelektrode derart geformt werden, dass der Kurzschlussübergang begünstigt wird oder bei hohen Abschmelzleistungen eine angepasste Wärmeführung ermöglicht wird.

Ein solcher über die Drahtelektroden-Position geführter Schweißprozess ist insbesondere vorteilhaft gegenüber einem lediglich über die Drahtelektroden-Geschwindigkeit geführten Schweißprozess.

Das Verfahren ist zum Lichtbogenschweißen mit abschmelzender Drahtelektrode. Das Verfahren erfolgt vorzugsweise unter Schutzgas. Entsprechend handelt es sich bei dem Verfahren vorzugsweise um ein Metallschutzgasschweißverfahren (MSG-Schweißverfahren), beispielsweise um ein Metallinertgasschweißverfahren (MIG-Schweißverfahren) oder ein Metallaktivgasschweißverfahren (MAG-Schweißverfahren).

Das Verfahren umfasst eine Mehrzahl von Schweißzyklen, die jeweils eine Kurzschlussphase und eine Lichtbogenphase aufweisen. Vorzugsweise folgen die Schweißzyklen der Mehrzahl von Schweißzyklen aufeinander. Die Folge der Schweißzyklen der Mehrzahl von Schweißzyklen können durch ein oder mehrere andere Zwischen-Schweißzyklen, beispielsweise Pulsprozess-Schweißzyklen, unterbrochen sein. Entsprechend ist auch ein Mischschweißverfahren denkbar, bei dem sich Folgen von ein oder mehreren Schweißzyklen, die jeweils eine Kurzschlussphase und eine Lichtbogenphase aufweisen, und Folgen von ein oder mehreren Zwischen-Schweißzyklen ohne Kurzschlussphase abwechseln.

Die Schweißzyklen weisen jeweils eine Kurzschlussphase und eine Lichtbogenphase auf. Die Kurzschlussphase beginnt insbesondere bei einem Kurzschlusseintritt zwischen Drahtelektrode und Schmelzbad und dauert bis zur nachfolgenden Kurzschlussauflösung an. Die Lichtbogenphase beginnt insbesondere bei der Kurzschlussauflösung und dauert bis zum nachfolgenden Kurzschlusseintritt an. Während der Lichtbogenphase brennt insbesondere ein Schweißlichtbogen zwischen der Drahtelektrode und einem Werkstück.

Die Lichtbogenphase umfasst vorzugsweise eine Lichtbogen-Entfernungsphase, in der die Drahtelektrode vom Schmelzbad weg gefördert wird (zurückgezogen wird). Die Lichtbogenphase umfasst weiter vorzugsweise eine Lichtbogen-Annäherungsphase, in der die Drahtelektrode zum Schmelzbad hin gefördert wird. Vorzugsweise folgt die Lichtbogen-Annäherungsphase einer Lichtbogenphase auf die Lichtbogen-Entfernungsphase der Lichtbogenphase

Die Kurzschlussphase umfasst vorzugsweise eine Kurzschluss-Annäherungsphase, in der die Drahtelektrode zum Schmelzbad hin gefördert wird. Die Kurzschlussphase umfasst weiter vorzugsweise eine Kurzschluss-Entfernungsphase, in der die Drahtelektrode vom Schmelzbad weg gefördert wird. Vorzugsweise folgt die Kurzschluss-Entfernungsphase einer Kurzschlussphase auf die Kurzschluss-Annäherungsphase der Kurzschlussphase.

Bei dem Verfahren wird die Drahtelektrode mit einer variablen Fördergeschwindigkeit gefördert. Die Fördergeschwindigkeit $v_F$ ist demnach vorzugsweise eine Funktion der Zeit, $v_F(t)$. Die Fördergeschwindigkeit entspricht - bis auf vernachlässigbare Differenzen durch Schlupf - der Drahtgeschwindigkeit der Drahtelektrode.

Bei dem Verfahren wird die Fördergeschwindigkeit und/oder der Schweißstrom abhängig von einem Wert für die aktuelle Position der Drahtelektrode geändert.

Insbesondere kann die Fördergeschwindigkeit abhängig von einem Wert für die aktuelle Position der Drahtelektrode geändert werden. Auf diese Weise kann die Fördergeschwindigkeit beispielsweise abhängig vom Abstand der Drahtelektrode zum Schmelzbad eingestellt werden, beispielsweise um einen zuverlässigen Tropfenübergang zu bewirken, ein zu tiefes Eintauchen der Drahtelektrode in das Schmelzbad zu verhindern oder um die Schweißgeschwindigkeit zu erhöhen.

Zusätzlich oder alternativ kann der Schweißstrom abhängig von einem Wert für die aktuelle Position der Drahtelektrode geändert werden. Auf diese Weise kann beispielsweise die Schweißstromführung mit der Drahtbewegung synchronisiert werden, beispielsweise um eine gleichmäßigere Schweißnaht zu erzielen.

Der Fördergeschwindigkeit und/oder der Schweißstrom können insbesondere geändert werden, wenn der Wert für die aktuelle Position der Drahtelektrode eine vorgegebene Position erreicht, insbesondere über- oder unterschreitet, beispielsweise einen vorgegebenen Abstand zwischen Drahtelektrode und Schmelzbad erreicht, insbesondere über- oder unterschreitet.

Bei dem Wert für die aktuelle Position der Drahtelektrode handelt es sich vorzugsweise um einen berechneten Wert.

Insbesondere kann der Wert für die aktuelle Position der Drahtelektrode abhängig von einer Referenzposition der Drahtelektrode und der Fördergeschwindigkeit oder einem Förderweg ermittelt werden. Die Referenzposition gibt insbesondere die Position der Drahtelektrode zu einem bestimmten Referenzzeitpunkt an und/oder legt diese fest, zum Beispiel auf einen vorgegebenen Referenzwert wie zum Beispiel Null. Die Referenzposition stellt, insbesondere zum Referenzzeitpunkt, vorzugsweise einen Bezug zur tatsächlichen Position der Drahtelektrode her, vorzugsweise in Bezug auf den Abstand der Drahtelektrode zur Schweißbadoberfläche.

Der Wert für die aktuelle Position kann dann zum Beispiel ausgehend von der Referenzposition durch Integration der zeitabhängigen Fördergeschwindigkeit vom Referenzzeitpunkt bis zum aktuellen Zeitpunkt berechnet werden. Für die Integration der Fördergeschwindigkeit können Sollwerte der Fördergeschwindigkeit verwendet werden oder, zur Erhöhung der Genauigkeit, erfasste Werte der Fördergeschwindigkeit, beispielsweise mittels eines an einer Drahtelektrodenfördereinrichtung zur Förderung der Drahtelektrode vorgesehenen Drehgeschwindigkeitssensors.

Weiterhin kann der Wert für die aktuelle Position ausgehend von der Referenzposition durch Addition eines Förderwegs berechnet werden. Für die Bestimmung des seit dem Referenzzeitpunkt zurückgelegten Förderwegs können zum Beispiel Signale an oder von einem Schrittmotor der Drahtelektrodenfördereinrichtung oder, zur Erhöhung der Genauigkeit, erfasste Werte für den Weg, beispielsweise mittels eines an der Drahtelektrodenfördereinrichtung vorgesehenen Wegsensors, zum Beispiel Drehwinkelsensors, verwendet werden. Liefert der Schrittmotor oder ein Drehwinkelsensor zum Beispiel je einen Puls nach Überstreichen eines bestimmten Winkels $\Delta\gamma$, so kann $x(t)$ inkrementell durch Addition bzw. Subtraktion eines zugehörigen differentiellen Wegs (z.B. $r_{Rolle} \cdot \Delta\gamma$, wobei $r_{Rolle}$ der Radius der entsprechenden Drahtförderrolle der Drahtfördereinrichtung ist) bei jedem Puls bestimmt werden.

Bei der Bestimmung des Werts für die aktuelle Position kann optional das Abschmelzen der Drahtelektrode berücksichtigt werden, beispielsweise durch Integration einer zum Beispiel durch eine verwendete Kennlinie vorgegebenen Abschmelzrate vom Referenzzeitpunkt bis zum aktuellen Zeitpunkt. Auf die Berücksichtigung des Abschmelzens der Drahtelektrode kann jedoch auch verzichtet werden, zum Beispiel durch geeignete Wahl der vorgegebenen Position und regelmäßige Wahl einer neuen Referenzposition, zum Beispiel zu Beginn jedes Schweißzyklus.

Die Referenzposition kann insbesondere abhängig von der Position der Drahtelektrode zum Kurzschlusseintritt und/oder zur Kurzschlussauflösung des aktuellen und/oder eines früheren Schweißzyklus bestimmt werden. Insbesondere kann die Position der Drahtelektrode zum Kurzschlusseintritt (oder zur Kurzschlussauflösung) als Referenzposition verwendet werden. Beispielsweise kann für die Position der Drahtelektrode zum Zeitpunkt des Kurzschlusseintritts (oder zum Zeitpunkt der Kurzschlussauflösung) ein vorgegebener Wert, beispielsweise Null, festgesetzt werden. Der Zeitpunkt des Kurzschlusseintritts (oder der Kurzschlussauflösung) kann dann als Referenzzeitpunkt für die Berechnung des Wertes für die aktuelle Position der Drahtelektrode verwendet werden.

Die oben genannte Aufgabe wird erfindungsgemäß weiterhin gelöst durch eine Steuereinrichtung für eine Schweißvorrichtung mit mindestens einem Mikroprozessor und mindestens einem Speicher, der Befehle enthält, deren Ausführung auf dem mindestens einen Mikroprozessor die Durchführung eines Lichtbogenschweißprozesses gemäß dem zuvor beschriebenen Verfahren oder einer Ausführungsform davon bewirkt.

Die oben genannte Aufgabe wird erfindungsgemäß weiterhin gelöst durch eine Schweißvorrichtung aufweisend die zuvor beschriebene Steuereinrichtung oder eine Ausführungsform davon.

Die Schweißvorrichtung umfasst insbesondere eine Schweißstromquelle, wobei es sich bei der Steuereinrichtung vorzugsweise um eine Steuereinrichtung der Schweißstromquelle handeln kann.

Die Schweißvorrichtung umfasst weiter vorzugsweise einen Schweißbrenner.

Die Schweißvorrichtung umfasst insbesondere eine Drahtfördereinrichtung zur Förderung einer Drahtelektrode. Die Drahtfördereinrichtung ist vorzugsweise am Schweißbrenner angeordnet oder in diesen integriert. Auf diese Weise wird eine hochdynamische Drahtförderung mit variabler Fördergeschwindigkeit ermöglicht, so dass die Fördergeschwindigkeit der Drahtelektrode innerhalb der einzelnen Schweißzyklen zuverlässig zeitabhängig gesteuert werden kann.

Die Schweißvorrichtung kann weiter ein Drahtvorschubgerät mit einer der Drahtfördereinrichtung vorgeschalteten weiteren Drahtfördereinrichtung aufweisen. Die weitere Drahtfördereinrichtung kann beispielsweise dazu eingerichtet sein und/oder von der Steuereinrichtung derart angesteuert werden, dass die Drahtelektrode mit einer oder mehreren mittleren Fördergeschwindigkeiten gefördert wird. Die Anpassung der Fördergeschwindigkeit innerhalb eines Schweißzyklus kann dann durch die der weiteren Drahtfördereinrichtung nachgeschaltete Drahtfördereinrichtung bewirkt werden. Um die Unterschiede zwischen den Fördergeschwindigkeiten der weiteren Drahtfördereinrichtung und der Drahtfördereinrichtung auszugleichen, kann zwischen der weiteren Drahtfördereinrichtung und der Drahtfördereinrichtung ein Drahtspeicher vorgesehen sein. Der Drahtspeicher kann insbesondere ein oder mehrere verschiebliche Rollen umfassen, um die die Drahtelektrode geführt wird, so dass mechanische Spannungen in der Drahtelektrode durch Unterschiede in den Fördergeschwindigkeiten durch Verschieben der Rollen kompensiert werden können. Es ist auch denkbar, den Drahtspeicher wegzulassen, insbesondere bei Verwendung eines Drahtführung, die gegenüber dem Außenquerschnitt der darin geführten Drahtelektrode einen ausreichend großen Innenquerschnitt aufweist, vorzugsweise eine Drahtführung, deren Innendurchmesser mindestens 5 mm größer ist als der Durchmesser der Drahtelektrode.

Die Drahtfördereinrichtung und/oder die weitere Drahtfördereinrichtung können insbesondere ein oder mehrere gegenüberliegende Rollen aufweisen, zwischen denen die Drahtelektrode geführt wird, wobei mindestens eine, vorzugsweise mindestens zwei gegenüberliegende Rollen angetrieben sind.

Zur genauen Erfassung der Fördergeschwindigkeit und/oder des Förderwegs umfasst die Schweißvorrichtung vorzugsweise eine Fördergeschwindigkeitsmesseinrichtung und/oder eine Förderwegmesseinrichtung, insbesondere an der Drahtfördereinrichtung. Die Fördergeschwindigkeitsmesseinrichtung kann beispielsweise einen Drehgeschwindigkeitssensor an einer Rolle der Drahtfördereinrichtung umfassen. Die Förderwegmesseinrichtung kann beispielsweise einen Drehwinkelsensor an einer Rolle der Drahtfördereinrichtung umfassen. Als Drehgeschwindigkeitssensor und/oder Drehwinkelsensor kann ein Drehencoder vorgesehen sein.

Die Drahtfördereinrichtung und die Fördergeschwindigkeits- und/oder Förderwegmesseinrichtung sind insbesondere mit der Steuereinrichtung verbunden, beispielsweise über eine drahtgebundene oder drahtlose Kommunikationsverbindung.

Im Folgenden werden verschiedene Ausführungsformen des Verfahrens, der Steuereinrichtung und der Schweißvorrichtung beschrieben, wobei die einzelnen Ausführungsformen jeweils unabhängig voneinander für das Verfahren, die Steuereinrichtung und die Schweißvorrichtung gelten. Darüber hinaus können die einzelnen Ausführungsformen beliebig miteinander kombiniert werden.

Bei einer Ausführungsform weist die Lichtbogenphase eine Lichtbogen-Annäherungsphase auf, in der die Drahtelektrode zu einem Schmelzbad hin gefördert wird, wobei während der Lichtbogen-Annäherungsphase die Fördergeschwindigkeit und/oder der Schweißstrom abhängig von einem Wert für die aktuelle Position der Drahtelektrode geändert wird. Auf diese Weise kann der Kurzschlusseintritt positionsabhängig vorbereitet werden.

Vorzugsweise werden die Fördergeschwindigkeit und/oder der Schweißstrom geändert, wenn der Wert für die aktuelle Position der Drahtelektrode einen vorgegebenen Abstandswert erreicht, insbesondere unterschreitet oder überschreitet. Der vorgegebener Abstandswert ist insbesondere ein vorgegebener Abstandswert zur Referenzposition, die beispielsweise zum Referenzzeitpunkt der Position der Schmelzbadoberfläche entsprechen kann.

Insbesondere kann die Fördergeschwindigkeit nach Erreichen des vorgegebenen Abstandswerts auf eine betragsmäßig geringere Fördergeschwindigkeit reduziert werden. Auf diese Weise kann ein zu tiefes Eintauchen der Drahtelektrode in das Schmelzbad in der nachfolgenden Kurzschlussphase verhindert werden. Darüber hinaus kann auf diese Weise eine günstige Tropfenformung und -ablösung erreicht werden.

Alternativ kann die Fördergeschwindigkeit nach Erreichen des vorgegebenen Abstandswerts auf eine betragsmäßig höhere Fördergeschwindigkeit erhöht werden. Auf diese Weise lässt sich der Schweißstrom erhöhen, ohne dass es zu einer vorzeitigen Tropfenablösung von der Drahtelektrode kommt. Weiterhin lässt sich der Kurzschlusseintritt auf diese Weise mechanisch bewirken.

Zusätzlich oder alternativ zu einer Änderung der Fördergeschwindigkeit kann auch der Schweißstrom abhängig von dem Wert für die aktuelle Position der Drahtelektrode geändert werden, insbesondere bei Erreichen bzw. Unterschreiten des vorgegebenen Abstandswerts. Beispielsweise kann eine Stromerhöhung mit einer abstandsabhängigen Beschleunigung der Drahtelektrode synchronisiert werden, um die Schweißenergie ohne vorzeitige Tropfenablösung zu erhöhen. Weiterhin kann bei Erreichen einer vorgegebenen Position der Drahtelektrode eine Stromabsenkung bewirkt werden, um eine Tropfenablösung herbeizuführen.

Bei einer Ausführungsform weist die Kurzschlussphase eine Kurzschluss-Entfernungsphase auf, in der die Drahtelektrode vom Schmelzbad weg gefördert wird, wobei die Fördergeschwindigkeit der Drahtelektrode während des Verlaufs der Kurzschluss-Entfernungsphase betragsmäßig erhöht wird, vorzugsweise mit abnehmender Rate.

Durch das betragsmäßige Erhöhen der Fördergeschwindigkeit während des Verlaufs der Kurzschluss-Entfernungsphase wird die Drahtelektrode schneller aus dem Schmelzbad gezogen, so dass sich die Kurzschlussphase schneller beenden lässt und der Schweißprozess schneller wird, insbesondere mit höherer Frequenz ablaufen kann. Die vorzugsweise abnehmende Rate der Erhöhung der Fördergeschwindigkeit, das heißt die abnehmende Beschleunigung der Drahtelektrode, vermeidet eine zu hohe Geschwindigkeit bei Kurzschlussauflösung und reduziert dadurch den Abbremsvorgang der Drahtelektrode.

Bei einer Ausführungsform wird die Fördergeschwindigkeit der Drahtelektrode während des Verlaufs der Kurzschluss-Entfernungsphase betragsmäßig bis zum Ablauf einer vorgegebenen Zeit seit Kurzschlusseintritt oder, wenn vor Ablauf der vorgegebenen Zeit eine Kurzschlussauflösung erfolgt, bis zur Kurzschlussauflösung erhöht. Läuft die vorgegebenen Zeit vor Kurzschlussauflösung ab, kann die Fördergeschwindigkeit anschließend bis zur Kurzschlussauflösung konstant sein, abnehmen oder zunehmen. Alternativ kann die Fördergeschwindigkeit der Drahtelektrode während des Verlaufs der Kurzschluss-Entfernungsphase betragsmäßig bis zum Durchlaufen einer vorgegebenen Wegstrecke seit Kurzschlusseintritt oder, wenn vor Durchlaufen der vorgegebenen Wegstrecke eine Kurzschlussauflösung erfolgt, bis zur Kurzschlussauflösung erhöht werden. Hat die Drahtelektrode die vorgegebene Wegstrecke vor Kurzschlussauflösung durchlaufen, kann die Fördergeschwindigkeit anschließend bis zur Kurzschlussauflösung konstant sein, abnehmen oder zunehmen. Auf diese Weise wird eine Beschleunigung der Drahtelektrode über einen ausreichend langen Zeitraum bzw. über eine ausreichend lange Wegstrecke erreicht, um den Kurzschluss schneller auflösen zu können.

Bei einer Ausführungsform weist die Lichtbogenphase eine Lichtbogen-Entfernungsphase auf, in der die Drahtelektrode vom Schmelzbad weg gefördert wird, wobei die Fördergeschwindigkeit der Drahtelektrode während des Verlaufs der Lichtbogen-Entfernungsphase bis zur Richtungsumkehr betragsmäßig reduziert wird. Auf diese Weise wird die Drahtelektrode nach der Kurzschlussauflösung weiter bis zu einem oberen Totpunkt beim Erreichen der Richtungsumkehr zurückgezogen, wobei es zur Ausbildung eines stabilen Lichtbogens kommt. Die Fördergeschwindigkeit der Drahtelektrode wird während des Verlaufs der Lichtbogen-Entfernungsphase vorzugsweise erst ab einem von dem Wert für die aktuelle Position der Drahtelektrode abhängigen Zeitpunkt reduziert, beispielsweise wenn der Wert für die aktuelle Position der Drahtelektrode einen vorgegebenen Positionswert erreicht, insbesondere überschreitet. Erreicht bzw. überschreitet der Wert für die aktuelle Position der Drahtelektrode den vorgegebenen Positionswert bereits zu Beginn der Lichtbogen-Entfernungsphase, so wird die Fördergeschwindigkeit der Drahtelektrode vorzugsweise bereits ab Beginn der Lichtbogen-Entfernungsphase betragsmäßig reduziert.

Auf diese Weise kann der obere Totpunkt bei Richtungsumkehr der Drahtelektrode gezielt eingestellt werden, insbesondere in einem gleichbleibenden Abstand zum Schmelzbad, wodurch ein gleichmäßigerer Schweißprozess bewirkt wird.

Bei einer Ausführungsform wird die Rate, mit der die Fördergeschwindigkeit der Drahtelektrode während des Verlaufs der Lichtbogen-Entfernungsphase bis zur Richtungsumkehr betragsmäßig reduziert wird, derart eingestellt, dass die Richtungsumkehr nach einer vorgegebenen Zeitdauer seit Kurzschlussauflösung erreicht wird. Auf diese Weise kann der obere Totpunkt der Drahtelektrode zu einem gewünschten Zeitpunkt erreicht werden, wodurch ein gleichmäßigeres Schweißverfahren ermöglicht wird.

Bei einer Ausführungsform wird die Fördergeschwindigkeit der Drahtelektrode im Bereich der Richtungsumkehr für eine vorgegebene Zeitdauer betragsmäßig kleiner oder gleich einem vorgegeben Geschwindigkeitswert gehalten. Der vorgegebene Geschwindigkeitswert kann insbesondere Null betragen, d.h. die Drahtelektrode wird bei der Richtungsumkehr vorzugsweise für eine vorgegebene Zeitdauer am oberen Totpunkt gehalten. Auf diese Weise kann das Schmelzbad beruhigt werden.

Bei einer Ausführungsform weist das Verfahren eine Mehrzahl von Pulsprozess-Schweißzyklen ohne Kurzschlussphase auf.

Bei dem Verfahren kann es sich entsprechend um ein Mischverfahren handeln, bei dem innerhalb eines Schweißvorgangs zwischen einem Kurzlichtbogenprozess, d.h. einem Schweißprozess mit Kurzschlussphase, und einem anderen Schweißprozess, insbesondere einem Pulsprozess, gewechselt wird.

Vorzugsweise werden ein oder mehrere Parameter eines auf einen Schweißzyklus mit Kurzschlussphase folgenden Schweißzyklus ohne Kurzschlussphase, insbesondere Pulsprozess-Schweißzyklus, abhängig von dem Wert für die aktuelle Position der Drahtelektrode eingestellt. Auf diese Weise kann der beim Kurzlichtbogenprozess gut bestimmbare Wert für die aktuelle Position der Drahtelektrode zur Einstellung des nachfolgenden Schweißzyklus verwendet werden, bei dem der Wert für die aktuelle Position - wegen der fehlenden Kurzschlussphase - schwieriger zu ermitteln wäre.

Insbesondere können ein oder mehrere auf einen Schweißzyklus mit Kurzschlussphase folgende Schweißzyklen ohne Kurzschlussphase mit Übergangswerten für einen oder mehrere Parameter betrieben werden, die sich von den Werten für die ein oder mehreren Parameter der nachfolgenden Schweißzyklen ohne Kurzschlussphase unterscheiden, wobei die Anzahl der mit den Übergangswerten betriebenen Schweißzyklen ohne Kurzschlussphase von der aktuellen Position der Drahtelektrode abhängt. Beispielsweise können die auf einen Schweißzyklus mit Kurzschlussphase folgenden Schweißzyklen solange mit den Übergangswerten betrieben werden, bis die Drahtelektrode um den Stickout während des Schweißzyklus mit Kurzschlussphase weitertransportiert wurde. Auf diese Weise kann die Erwärmung dieses Stickouts durch den Kurzschlussstrom während der Kurzschlussphase bei den nachfolgenden ersten Schweißzyklen ohne Kurzschlussphase berücksichtigt werden, bis ein nicht vom Kurzschlussstrom beaufschlagtes Drahtstück vorgerückt ist.

Bei einer Ausführungsform wird während der Kurzschlussphase eine Gegenspannung in Reihe zur Schweißspannung zugeschaltet, insbesondere bei Erreichen einer Vorgabebedingung für den Wert der Schweißspannung. Auf diese Weise können die Auflösung des Kurzschlusses beschleunigt und Schweißspritzer reduziert werden. Als Vorgabebedingung kann beispielsweise das Überschreiten eines vorgegebenen Schweißspannungsschwellwerts oder einer vorgegebenen Schweißspannungsänderung verwendet werden.

Weitere Merkmale und Vorteile der Verfahren und der Steuereinrichtung und der Schweißvorrichtung ergeben sich aus der nachfolgenden Beschreibung von Ausführungsbeispielen, wobei auf die beigefügte Zeichnung Bezug genommen wird.

In der Zeichnung zeigen

Fig. 1    ein Ausführungsbeispiel der Steuereinrichtung und der Schweißvorrichtung,

Fig. 2    ein Beispiel eines Drahtspeichers,

Fig. 3    mehrere Diagramme über einer gemeinsamen Zeitachse zur Illustration eines Ausführungsbeispiels des Verfahrens,

Fig. 4    weitere Diagramme über einer gemeinsamen Zeitachse zum Ausführungsbeispiel des Verfahrens aus Fig. 3 und

Fig. 5    weitere Diagramme über einer gemeinsamen Zeitachse zum Ausführungsbeispiel des Verfahrens aus Fig. 3.

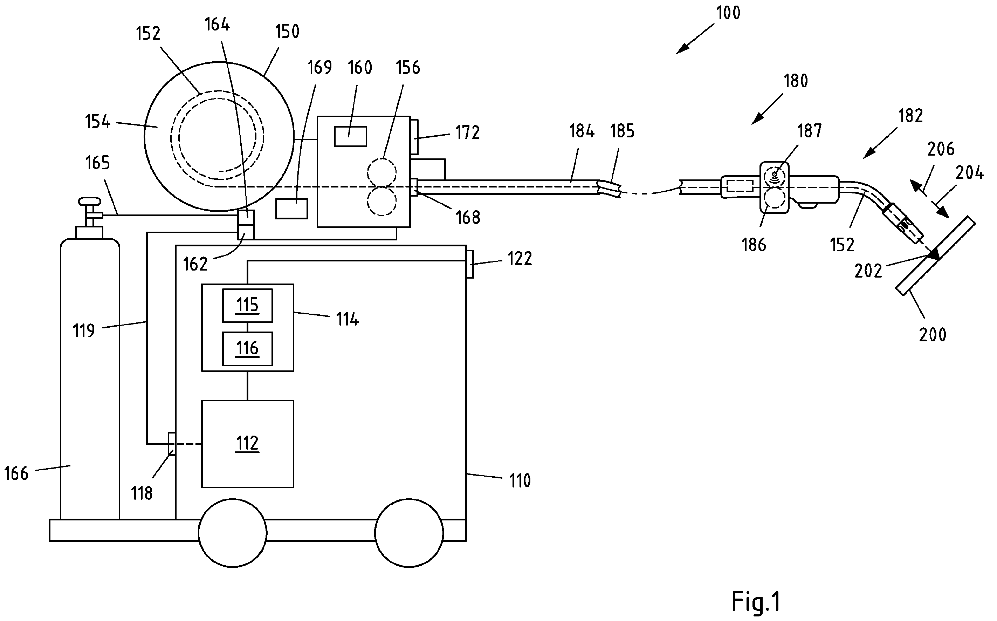

Fig. 1 zeigt ein Ausführungsbeispiel der Steuereinrichtung und der Schweißvorrichtung in schematischer Ansicht. Die Schweißvorrichtung 100 ist zum Metallschutzgas-(MSG)-schweißen ausgebildet, beispielsweise zum Metallinertgas-(MIG)- oder zum Metallaktivgas-(MAG)-Schweißen.

Die Schweißvorrichtung 100 umfasst eine Schweißstromquelle 110 zur Bereitstellung eines Schweißstroms mit einem Leistungsteil 112 und einer Steuereinrichtung 114. Die Steuereinrichtung 114 weist einen Mikroprozessor 115 und einen Speicher 116 mit Befehlen auf. Die Steuereinrichtung 114 ist zur Steuerung der Schweißstromquelle 110 eingerichtet und steuert insbesondere das Leistungsteil 112. Zu diesem Zweck enthält der Speicher 116 insbesondere entsprechende Befehle, deren Ausführung auf dem Mikroprozessor 115 die Steuerung der Schweißstromquelle bewirkt. Das Leistungsteil 112 ist dazu eingerichtet, einen Schweißstrom zum Schweißen über einen elektrischen Ausgang 118 der Schweißstromquelle 110 bereitzustellen.

Die Schweißvorrichtung 100 umfasst weiter ein Drahtvorschubgerät 150 zum Transport einer Drahtelektrode 152. Das Drahtvorschubgerät 150 weist einen Drahtelektrodenvorrat 154 in Form einer Drahtelektrodentrommel, eine primäre Drahtelektrodenfördereinrichtung 156, die vorzugsweise angetriebene Rollen zur kontrollierten Förderung der Drahtelektrode 152 umfasst, und eine Steuereinrichtung 160, die zur Steuerung des Drahtvorschubgeräts 150 ausgebildet ist, auf.

Das Drahtvorschubgerät 150 weist weiter einen elektrischen Eingang 162 zum Einspeisen des von der Schweißstromquelle 110 bereitgestellten Schweißstroms auf, der für den Betrieb über eine elektrische Leitung 119 mit dem elektrischen Ausgang 118 der Schweißstromquelle verbunden wird. Weiter weist das Drahtvorschubgerät 150 einen Schutzgas-Einlass 164 zum Einspeisen eines Schutzgases auf, der für den Betrieb über eine Gasleitung 165 mit einer Schutzgasquelle 166, wie zum Beispiel einer Gasflasche, verbunden wird.

Das Drahtvorschubgerät 150 weist weiter einen Brenneranschluss 168 zum Anschließen eines Schweißbrenners 180 der Schweißvorrichtung 100 auf. Über den Brenneranschluss 168 werden die von der primären Drahtelektrodenfördereinrichtung 156 geförderte Drahtelektrode 152, der von der Schweißstromquelle 110 bereitgestellte Schweißstrom und das von der Schutzgasquelle 166 bereitgestellte Schutzgas für den Schweißbrenner 180 bereitgestellt.

Die Steuereinrichtung 160 ist insbesondere zur Steuerung der primären Drahtelektrodenfördereinrichtung 156 eingerichtet. Weiterhin kann die Steuereinrichtung 160 dazu eingerichtet sein, den am Brenneranschluss 168 bereitgestellten Schutzgasstrom zu steuern. Zu diesem Zweck kann das Drahtvorschubgerät 150 zwischen dem Schutzgas-Einlass 164 und dem Brenneranschluss 168 ein zum Beispiel steuerbares Ventil 169 aufweisen, mit dem sich der Schutzgasstrom einstellen lässt.

Die Steuereinrichtung 114 der Schweißstromquelle 110 und die Steuereinrichtung 160 des Drahtvorschubgeräts 150 sind vorzugsweise über eine Kommunikationsverbindung miteinander verbunden, zum Beispiel über die Leitung 119 oder über eine gesonderte Datenleitung, so dass eine der beiden Steuereinrichtungen 114, 160 Steuerbefehle an die jeweilige andere der beiden Steuereinrichtungen 114, 160 übertragen kann. Auf diese Weise kann beispielsweise die Steuereinrichtung 114 dazu eingerichtet sein, sowohl die Schweißstromquelle 110 als auch das Drahtvorschubgerät 150 zu steuern.

An der Schweißstromquelle 110 und/oder an dem Drahtvorschubgerät 150 ist vorzugsweise eine jeweilige Nutzerschnittstelle 122, 172 vorgesehen, über die der Nutzer Betriebsinformationen ablesen und/oder Steuerbefehle eingeben kann.

Der Schweißbrenner 180 weist ein Brennerteil 182 und ein Schlauchpaket 184 auf. Das Schlauchpaket 184 ist an den Brenneranschluss 168 des Drahtvorschubgeräts 150 angeschlossen, so dass im Betrieb die von der primären Drahtelektrodenfördereinrichtung 156 geförderte Drahtelektrode 152 über den Brenneranschluss 168 durch eine durch das Schlauchpaket 184 verlaufende Drahtführung 185 in Form einer Hohlleitung zum Brennerteil 182 geführt wird und weiter der von der Schweißstromquelle 110 bereitgestellte und durch das Drahtvorschubgerät 150 geschleifte Schweißstrom über den Brenneranschluss 168 durch eine durch das Schlauchpaket 184 verlaufende elektrische Leitung zum Brennerteil 182 geleitet wird, wo der Schweißstrom über eine Kontaktierung auf die Drahtelektrode 152 geleitet wird.

Im Brennerteil 182 ist eine sekundäre Drahtelektrodenfördereinrichtung 186 angeordnet, die vorzugsweise angetriebene Rollen zur kontrollierten Förderung der Drahtelektrode 152 umfasst und eine präzise und dynamische Einstellung der Fördergeschwindigkeit erlaubt, mit der die Drahtelektrode 152 aus dem Brennerteil 182 austritt. Die sekundäre Drahtelektrodenfördereinrichtung 186 wird ebenfalls von der Steuereinrichtung 114 gesteuert, beispielsweise über eine in das Schlauchpaket 184 integrierte Datenleitung.

Im Betrieb wird die Drahtelektrode 152 von der primären Drahtelektrodenfördereinrichtung 156 mit einer variablen primären Fördergeschwindigkeit $v_P(t)$ und von der sekundären Drahtelektrodenfördereinrichtung 186 mit einer variablen sekundären Fördergeschwindigkeit $v_F(t)$ gefördert. Bei der primären Fördergeschwindigkeit kann es sich insbesondere um eine durchschnittliche Fördergeschwindigkeit handeln. Die tatsächliche Austrittsgeschwindigkeit der Drahtelektrode 152 aus dem Brennerteil 182, die sich innerhalb eines Schweißzyklus mehrfach bzw. kontinuierlich ändern kann, entspricht der sekundären Fördergeschwindigkeit. Die Fördergeschwindigkeit $v_F(t)$ kann positiv und negativ sein. Unter einer positiven Fördergeschwindigkeit $v_F(t)$, d.h. $v_F(t) > 0$ m/min., wird vorliegend verstanden, dass die Drahtelektrode 152 aus dem Brennerteil 182 herausbewegt wird, d.h. beim Schweißen eines Werkstücks 200 auf das Schmelzbad 202 zubewegt wird (Pfeil 204). Unter einer negativen Fördergeschwindigkeit $v_F(t)$, d.h. $v_F(t) < 0$ m/min., wird vorliegend verstanden, dass die Drahtelektrode 152 in das Brennerteil 182 hineinbewegt wird, d.h. beim Schweißen eines Werkstücks 200 von dem Schmelzbad 202 wegbewegt wird (Pfeil 206).

Die Förderung der Drahtelektrode 152 mit der Drahtelektrodenfördereinrichtung 156 ergibt einen Förderweg $s_F(t)$. Bei einer positiven Fördergeschwindigkeit $v_F(t)$ nimmt der Förderweg $s_F(t)$ zu, bei einer negativen Fördergeschwindigkeit $v_F(t)$ nimmt der Förderweg $s_F(t)$ ab.

Zum genauen Erfassen der Fördergeschwindigkeit $v_F(t)$ oder des Förderwegs $s_F(t)$ ist an der sekundären Drahtelektrodenfördereinrichtung 186 eine Fördergeschwindigkeits- und/oder Förderwegerfassungseinrichtung 187, beispielsweise in Form eines Drehencoders an einer der angetriebenen Rollen, vorgesehen.

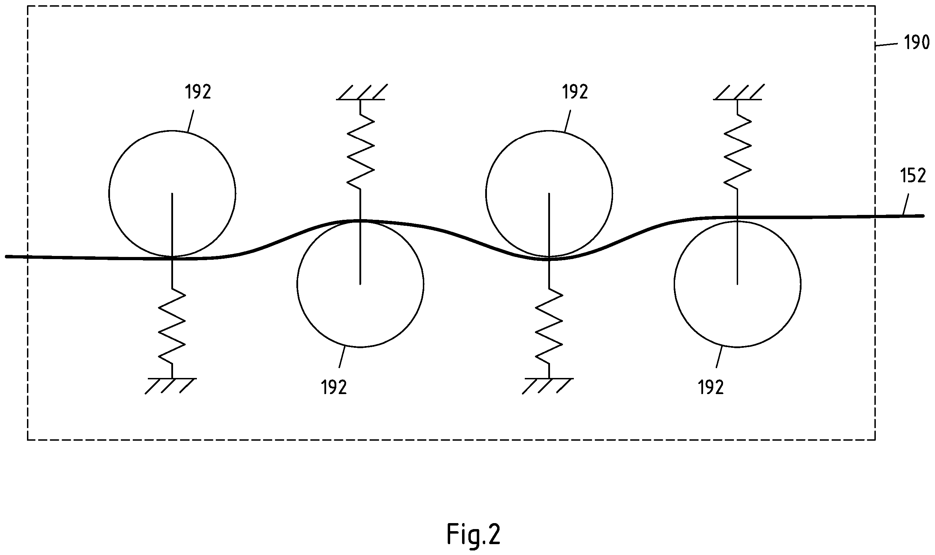

Unterschiede zwischen der primären und sekundären Fördergeschwindigkeit können durch einen zwischen die primäre und sekundäre Drahtelektrodenfördereinrichtung 156, 186 geschalteten optionalen Drahtspeicher 190 kompensiert werden. Fig. 2 zeigt eine schematische Darstellung für einen solchen Drahtspeicher 190, der ein Spiel aus federgelagerten Rollen 192 aufweist, um die die Drahtelektrode 152 geführt ist. Alternativ kann durch eine Drahtführung 185 mit gegenüber dem Außendurchmesser der Drahtelektrode 152 großem Innendurchmesser ausreichend Spiel für die Drahtelektrode bereitgestellt werden, um Unterschiede in der primären und sekundären Fördergeschwindigkeit auszugleichen.

Weiterhin wird im Betrieb der am Brenneranschluss 168 bereitgestellte Schutzgasstrom durch eine durch das Schlauchpaket 184 verlaufende Schutzgasleitung zum Brennerteil 182 geleitet, um dort einen Schutzgasmantel für den Schweißvorgang zu erzeugen.

Am Brennerteil 182 ist schließlich noch ein Brennertaster 188 zum Starten eines Schweißvorgangs vorgesehen.

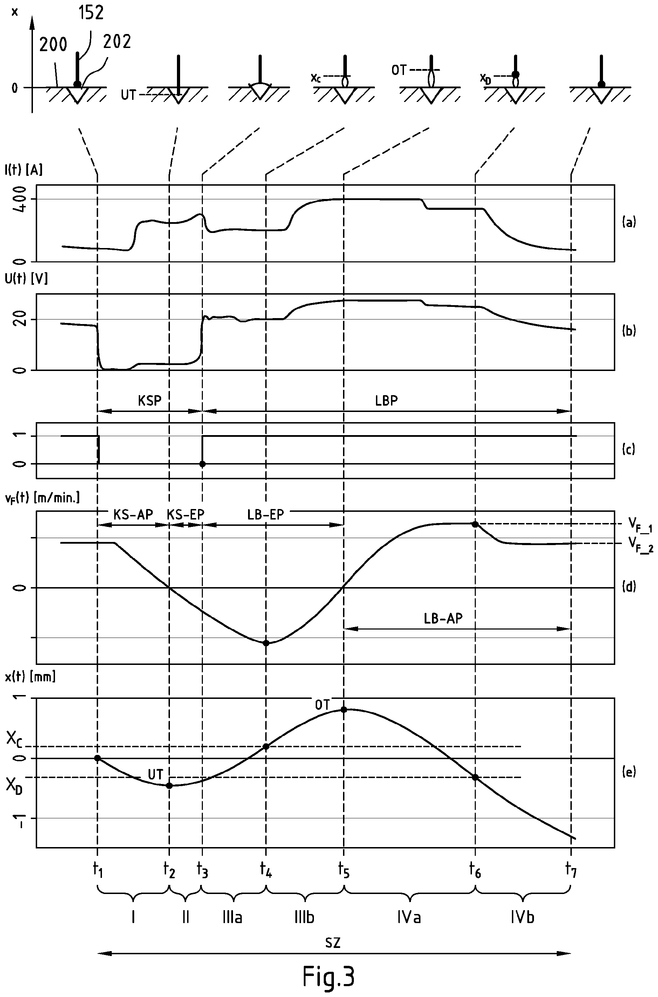

Im Folgenden wird anhand der Fig. 3 ein Verfahren zum Lichtbogenschweißen mit der Schweißvorrichtung 100 beschrieben. Das Verfahren wird von der Steuereinrichtung 114 der Schweißstromquelle 110 gesteuert, beispielsweise bei Betätigung des Brennertasters 188.

Fig. 3 zeigt mehrere Diagramme über einer gemeinsamen Zeitachse zur Illustration eines Ausführungsbeispiels des Verfahrens.

Das Diagramm (a) zeigt den Schweißstrom I(t), das Diagramm (b) zeigt die Schweißspannung U(t), das Diagramm (c) zeigt als digitales Signal die Kurzschlussphase (0) bzw. die Lichtbogenphase (1) an, das Diagramm (d) zeigt die von der Fördergeschwindigkeitserfassungseinrichtung 187 gemessene Fördergeschwindigkeit $v_F(t)$ der Drahtelektrode 152 und das Diagramm (e) zeigt einen Wert $x(t)$ für die Position der Drahtelektrode an, der ausgehend von einer Referenzposition durch Addition eines erfassten Förderwegs $s(t)$ oder durch Integration der Fördergeschwindigkeit $v_F(t)$ bestimmt wird. Zu Gunsten der Anschaulichkeit ist das Vorzeichen für $v_F(t)$ vorliegend so gewählt, dass positive Geschwindigkeitswerte einer Bewegung zum Schmelzbad hin und negative Geschwindigkeitswerte einer Bewegung vom Schmelzbad weg entsprechen, und weiter das Vorzeichen für $x(t)$ so gewählt, dass, wenn sich die Schmelzbadoberfläche bei Null befindet, positive Werte sich oberhalb der Schmelzbadoberfläche (außerhalb des Schmelzbads) und negative Werte sich unterhalb der Schmelzbadoberfläche (innerhalb des Schmelzbads) befinden. Diese Vorzeichenwahl bedingt eine Vorzeichenumkehr zwischen $x(t)$ und $v_F(t)$, d.h. ein positiver Geschwindigkeitswert $v_F(t)$ führt zu einer Änderung von $x(t)$ zum Negativen hin und umgekehrt.

Oberhalb der Diagramme ist weiter schematisch für einige ausgewählte Zeitpunkte ($t_1$ bis $t_7$) eine schematische Darstellung von Drahtelektrode 152, Werkstück 200 und Schmelzbad 202 zu den betreffenden Zeitpunkten gezeigt.

Das Schweißverfahren umfasst eine Mehrzahl von aufeinanderfolgenden Schweißzyklen SZ, von denen in Fig. 3 einer gezeigt ist. Ein Schweißzyklus SZ weist jeweils eine Kurzschlussphase KSP und eine Lichtbogenphase LBP auf. Weiter weist die Kurzschlussphase KSP eine Kurzschluss-Annäherungsphase KS-AP und eine Kurzschluss-Entfernungsphase KS-EP auf. Die Lichtbogenphase LBP weist entsprechend eine Lichtbogen-Entfernungsphase LB-EP und eine Lichtbogen-Annäherungsphase LB-AP auf.

Während der Kurzschluss-Annäherungsphase KS-AP und der Lichtbogen-Annäherungsphase LB-AP wird die Drahtelektrode 152 jeweils zum Schmelzbad 202 hin gefördert. Während der Kurzschluss-Entfernungsphase KS-EP und der Lichtbogen-Entfernungsphase LB-EP wird die Drahtelektrode 152 jeweils vom Schmelzbad 202 weg gefördert.

Die Steuereinrichtung 114 erfasst über entsprechende Messeinrichtungen den von der Schweißstromquelle 110 bereitgestellten Schweißstrom $I(t)$, der beim Schweißen von der Drahtelektrode 152 zum Werkstück 200 fließt, und die von der Schweißstromquelle 110 bereitgestellte Schweißspannung $U(t)$, die - bis auf geringe Spannungsverluste durch Leitungswiderstände - zwischen der Drahtelektrode 152 und dem Werkstück 200 anliegt. Die Steuereinrichtung 114 ist dazu eingerichtet, abhängig von der Schweißspannung $U(t)$ den Kurzschlusseintritt ($t_1$ in Fig. 3) und die Kurzschluss-auflösung ($t_3$ in Fig. 3) zu erkennen. Sinkt die Schweißspannung $U(t)$ in der Lichtbogenphase unter einen vorgegebenen Schwellenwert, z.B. 10 V, ab, so erkennt die Steuereinrichtung 114 den Kurzschlusseintritt. Steigt die Schweißspannung $U(t)$ in der Kurzschlussphase über einen vorgegebenen Schwellenwert, z.B. 15 V, so erkennt die Steuereinrichtung 114 die Kurzschlussauflösung. Die Steuereinrichtung 114 erhält zudem kontinuierlich die von der Fördergeschwindigkeits-und/oder Förderwegerfassungseinrichtung 187 gemessene Fördergeschwindigkeit $v_F(t)$ der Drahtelektrode 152 oder den gemessenen Förderweg $s_F(t)$ der Drahtelektrode 152, zum Beispiel über die in das Schlauchpaket 184 integrierte Datenleitung.

Die Steuereinrichtung 114 ist dazu eingerichtet, die sekundäre Drahtelektrodenfördereinrichtung 186 zur Anpassung der Fördergeschwindigkeit $v_F(t)$ und das Leistungsteil 112 zur Anpassung des Schweißstroms $I(t)$ anzusteuern, und zwar insbesondere abhängig von einem Wert $x(t)$ für die aktuelle Position der Drahtelektrode.

Den Wert $x(t)$ für die aktuelle Position der Drahtelektrode 152 kann die Steuereinrichtung 114 anhand der Fördergeschwindigkeit $v_F(t)$ oder des Förderwegs $s_F(t)$ und einer Referenzposition bestimmen. Als Referenzposition kann die Steuereinrichtung 114 beispielsweise die Position der Drahtelektrode 152 zum Kurzschlusseintritt verwenden. Der Zeitpunkt des Kurzschlusseintritts ist dann der Referenzzeitpunkt. Dazu kann die Steuereinrichtung 114 den Wert $x(t_1)$ für die Position der Drahtelektrode 152 zum Kurzschlusseintritt (bei $t_1$) auf einen vorgegebenen Wert, beispielsweise $x(t_1) = 0$ mm, setzen und den Zeitpunkt $t_1$ des Kurzschlusseintritts als Referenzzeitpunkt speichern. Den Wert $x(t)$ für die aktuelle Position der Drahtelektrode 152 kann die Steuereinrichtung dann zum Beispiel abhängig von der Fördergeschwindigkeit $v_F(t)$ nach folgender Formel berechnen (das Minuszeichen vor dem Integral ergibt sich vorliegend durch die zuvor beschriebene Vorzeichenwahl für $x(t)$ und $v_F(t)$):

$$x(t) = x(t_1) - \int_{t_1}^{t} (v_F(t) - C(I(t))) dt,$$

oder abhängig von dem Förderweg $s_F(t)$ nach folgender Formel berechnen (das Minuszeichen vor dem $s_F(t)$-Term ergibt sich vorliegend durch die zuvor beschriebene Vorzeichenwahl für $x(t)$ und $s_F(t)$):

$$x(t) = x(t_1) - (s_F(t) - s_F(t_1)) - \int_{t_1}^{t} C(I(t)) dt,$$

wobei $C(I(t))$ jeweils eine phänomenologisch bestimmte Abschmelzrate der Drahtelektrode 152 abhängig von der Stromstärke $I(t)$ darstellt, die zum Beispiel im Speicher der Steuereinrichtung 114 gespeichert sein kann. Die Abschmelzrate kann insbesondere berücksichtigen, dass das aufschmelzende Material des Drahts am Drahtende einen Tropfen formt, dessen Durchmesser geringer ist als die Länge des dafür aufgeschmolzenen Drahtstücks. Zur Vereinfachung kann auch von einer von der Stromstärke unabhängigen Abschmelzrate $C(I(t)) = const.$ ausgegangen oder die Abschmelzrate vernachlässigt werden $C(I(t)) = 0$ m/min.

Da davon ausgegangen werden kann, dass die Drahtelektrode 152 zum Kurzschlusseintritt die Schmelze 202 gerade berührt, entsprechen die mit obiger Formel berechneten Werte $x(t)$ für die jeweils aktuelle Position der Drahtelektrode 152 näherungsweise dem Abstand der Drahtelektrode 152 zur Schmelzbadoberfläche.

Die Vernachlässigung der Abschmelzrate führt zu einer kontinuierlichen Abweichung zwischen dem berechneten Wert von $x(t)$ und der tatsächlichen Position der Drahtelektrodenspitze relativ zum Schmelzbad. Diese Abweichung kann jedoch durch eine geeignete Wahl der vorgegebenen Position kompensiert werden. Zudem kann die Referenzposition regelmäßig neu bestimmt werden, beispielsweise bei jedem Kurzschlusseintritt, so dass die Werte von $x(t)$ regelmäßig zur tatsächlichen Lage der Schmelzbadoberfläche kalibriert und/oder justiert werden.

Alternativ zur Position bei Kurzschlusseintritt kann auch eine andere Referenzposition verwendet werden, beispielsweise die Position der Drahtelektrode 152 zur Kurzschlussauflösung, eine aus den Positionen der Drahtelektrode 152 bei Kurzschlusseintritt und Kurzschlussauflösung gemittelte Position oder eine über die Position der Drahtelektrode bei Kurzschlusseintritt und/oder Kurzschlussauflösung mehrerer vergangener Schweißzyklen gemittelte Position. Diese verschiedenen Referenzposition unterscheiden sich typischerweise leicht voneinander, zum Beispiel aufgrund der Dynamik des Schmelzbads, des Lichtbogendrucks oder Oberflächenspannungseffekten bei der Wechselwirkung von Schmelzbad und Drahtelektrode 152.

Die Steuerung der Fördergeschwindigkeit $v_F(t)$ und des Schweißstroms $I(t)$ durch die Steuereinrichtung 114 in den einzelnen Phasen des Schweißzyklus wird nun im Folgenden beschrieben:

Kurzschluss-Annäherungsphase KS-AP (Phase I):

Der Schweißzyklus beginnt mit der Kurzschlussphase und damit mit dem Kurzschlusseintritt (Zeitpunkt $t_1$ in Fig. 3). Zum Zeitpunkt des Kurzschlusseintritts und auch eine gewisse Zeit nach Kurzschlusseintritt bewegt sich die Drahtelektrode 152 zum Schmelzbad 202 hin und taucht dadurch in das Schmelzbad 202 ein.

In dieser Kurzschluss-Annäherungsphase KS-AP steuert die Steuereinrichtung 114 die Drahtelektrodenfördereinrichtung 186 nach Detektion des Kurzschlusses so an, dass die Fördergeschwindigkeit $v_F(t)$ bis zur Richtungsumkehr reduziert und somit die Drahtelektrode 152 abgebremst wird. Weiterhin speichert die Steuereinrichtung 114 wie zuvor beschrieben $x(t_1)$ als Referenzposition der Drahtelektrode 152 zum Referenzzeitpunkt $t_1$ bzw. setzt $x(t_1)$ auf einen vorgegebenen Wert fest, um nachfolgend den jeweiligen Wert $x(t)$ für die aktuelle Position der Drahtelektrode 152 ausgehend vom Referenzzeitpunkt $t_1$ berechnen zu können. Die Steuereinrichtung 114 kann die Referenzposition $x(t_1)$ zum Beispiel gleich Null setzen, wie in Fig. 3 gezeigt ist, so dass $x(t)$ die Position relativ zur Referenzposition $x(t_1)$ angibt. Die Abschmelzrate wird bei der Berechnung von $x(t)$ vorliegend vernachlässigt, d.h. $C(I(t)) = 0$ m/min.

Zum Zeitpunkt $t_2$ wird die Fördergeschwindigkeit $v_F(t_2) = 0$ m/min. erreicht und die Drahtelektrode 152 befindet sich am unteren Totpunkt UT, an dem die Drahtelektrode 152 am tiefsten in das Schmelzbad 202 eingetaucht ist.

Kurzschluss-Entfernungsphase KS-EP (Phase II):

Nach dem unteren Totpunkt UT (Zeitpunkt $t_2$) bewirkt die Steuereinrichtung 114 eine weitere Änderung der Fördergeschwindigkeit $v_F(t)$ ins Negative, so dass sich die Drahtelektrode 152 vom Schmelzbad 152 wegbewegt. In dieser Kurzschluss-Entfernungsphase KS-EP wird die Drahtelektrode 152 demnach aus dem Schmelzbad 152 gezogen, bis sich der Kurzschluss auflöst (Zeitpunkt $t_3$).

Die Steuereinrichtung 114 bewirkt in der Kurzschluss-Entfernungsphase eine kontinuierlich abnehmende (negative) Beschleunigung auf die Drahtelektrode, was eine kontinuierlich zunehmende Fördergeschwindigkeit bewirkt, wobei die Rate der Fördergeschwindigkeitszunahme, d.h. die Beschleunigung der Drahtelektrode, abnimmt. Die Abnahme der Rate der Fördergeschwindigkeitsänderung ist vorzugsweise so eingestellt, dass die (negative) Fördergeschwindigkeit über eine vorgegebene Wegstrecke der Position der Drahtelektrode seit Kurzschlusseintritt, bestimmt über $x(t)$, oder über eine vorgegebene Zeitdauer seit Kurzschlusseintritt betragsmäßig weiter zunimmt. Die vorgegebene Zeitdauer kann beispielsweise mindestens 3 ms, weiter bevorzugt mindestens 3,5 ms, betragen. Auf diese Weise wird die Drahtelektrode für eine ausreichend lange Wegstrecke bzw. einen ausreichend langen Zeitraum immer schneller vom Schmelzbad wegbewegt, um den Kurzschluss aufzulösen. Wenn sich der Kurzschluss bis zum Ablauf des Zeitraums nicht aufgelöst hat, kann die Fördergeschwindigkeit $v_F(t)$ weiter erhöht, reduziert oder beibehalten werden, bis sich der Kurzschluss auflöst.

Lichtbogen-Entfernungsphase LB-EP (Phase III):

Mit der Kurzschlussauflösung (Zeitpunkt $t_3$) zündet der Lichtbogen zwischen Drahtelektrode 152 und Werkstück 200, und die Drahtelektrode 152 entfernt sich vom Schmelzbad bis zum Erreichen eines oberen Totpunkts (OT), an dem die Drahtelektrode 152 den größten Abstand zum Schmelzbad hat.

Ab Detektion der Kurzschlussauflösung vergleicht die Steuereinrichtung 114 den Wert x(t) für die aktuelle Position der Drahtelektrode 152 kontinuierlich mit einem vorgegebenen Abstandswert xc (Phase IIIa). Erst wenn der Wert x(t) für die aktuelle Position den Abstandswert xc, d.h. eine vorgegebene Position, erreicht bzw. überschreitet, bewirkt die Steuereinrichtung 114, dass die (negative) Fördergeschwindigkeit $v_F(t)$ betragsmäßig reduziert wird, d.h. die Drahtelektrode 152 abgebremst wird (Phase IIIb). Ist xc bereits zum Zeitpunkt der Kurzschlussauflösung überschritten, bewirkt die Steuereinrichtung 114 die betragsmäßige Reduzierung der Fördergeschwindigkeit unmittelbar nach Kurzschlussauflösung.

Durch diese positionsabhängige Steuerung der Fördergeschwindigkeit wird erreicht, dass die Drahtelektrode 152 bis zu einem vorgegebenen Mindestabstand zum Schmelzbad schnell vom Schmelzbad wegbewegt wird. Auf diese Weise wird die Schmelzbaddynamik positiv beeinflusst. Die Steuereinrichtung 114 bewirkt dann weiter eine betragsmäßige Reduzierung der Fördergeschwindigkeit $v_F(t)$ bis zur Richtungsumkehr, d.h. bis zum Erreichen des oberen Totpunkts OT.

Zusätzlich oder alternativ kann die Steuereinrichtung 114 die Fördergeschwindigkeit $v_F(t)$ nach der Kurzschlussauflösung abhängig von x(t) auch so steuern, dass der obere Totpunkt OT bei einem vorgegebener Wert $x_{OT}$ erreicht wird.

Zusätzlich oder alternativ zur Fördergeschwindigkeit $v_F(t)$ kann die Steuereinrichtung 114 nach Erreichen bzw. Überschreiten des Abstandswert xc auch den Schweißstrom I(t) ändern, insbesondere einen Aufschmelzstrompuls zum Aufschmelzen der Drahtelektrode auslösen, optional nach Ablauf einer vorgegebenen Zeitdauer seit Erreichen bzw. Überschreiten des Abstandswerts xc. Auf diese Weise kann der Aufschmelzstrompuls zum Aufschmelzen eines Tropfens auf die Drahtposition synchronisiert werden.

Vorzugsweise stellt die Steuereinrichtung 114 die Rate der Fördergeschwindigkeitsänderung, d.h. die Beschleunigung der Drahtelektrode 152, so ein, dass der obere Totpunkt nach einer vorgegebenen Zeitdauer ($\Delta t_{OT}$) nach Kurzschlussauflösung ($t_3$) erreicht wird, wodurch ein gleichmäßigeres Schweißverfahren bewirkt wird.

Lichtbogen-Annäherungsphase LB-AP (Phase IV):

Nach Erreichen des oberen Totpunkts OT bewirkt die Steuereinrichtung 114 eine (weitere) Erhöhung der Fördergeschwindigkeit $v_F(t)$, so dass sich die Drahtelektrode 152 wieder auf das Schmelzbad 202 zu bewegt, optional nach einer vorgegebenen Haltezeit der Drahtelektrode 152 am Totpunkt. Die Rate der Fördergeschwindigkeitserhöhung, d.h. die Beschleunigung der Drahtelektrode zum Schmelzbad 202, kann konstant oder auch variabel sein.

Insbesondere kann die Drahtelektrode 152 bis zu einer ersten vorgegebenen Geschwindigkeit $v_{F\_1}$ beschleunigt und dann konstant bei $v_{F\_1}$ gehalten werden.

Ab der Richtungsumkehr am oberen Totpunkt OT (Phase IVa) vergleicht die Steuereinrichtung 114 den Wert x(t) für die aktuelle Position der Drahtelektrode 152 mit einem vorgegebenen Abstandswert $x_D$. Wenn der Wert x(t) für die aktuelle Position den Abstandswert $x_D$, d.h. eine vorgegebene Position, erreicht bzw. unterschreitet, bewirkt die Steuereinrichtung 114, dass die Fördergeschwindigkeit $v_F(t)$ betragsmäßig geändert wird (Phase IVb). Die Fördergeschwindigkeit $v_F(t)$ kann auf diese Weise zielgerichtet geändert werden, wenn sich die Drahtelektrode 152 in einem vorgegebenen Abstand zum Schmelzbad 202 befindet.

Die Fördergeschwindigkeit $v_F(t)$ kann in der Phase IVb insbesondere reduziert werden, beispielsweise wie in Fig. 3 gezeigt auf einen vorgegebenen geringeren Geschwindigkeitswert $v_{F\_2}$ abgesenkt werden. Auf diese Weise kann mit einem höheren Drahtabstand zum Werkstück gearbeitet und ein unnötig tiefes Eintauchen der Drahtelektrode in das Schmelzbad beim bevorstehenden Kurzschluss vermieden werden. Zudem führt das Abbremsen der Drahtelektrode dazu, dass sich die flüssige Phase am Draht aufgrund ihrer Trägheit schneller zum Schmelzbad hinbewegt als die feste Phase der abgebremsten Drahtelektrode. Dadurch wird die flüssige Phase am Draht in die Länge gezogen, wodurch die Ablösung des Tropfens erleichtert wird. Die gegenüber der festen Phase erhöhte Geschwindigkeit der flüssigen Phase führt zudem zu einem schnellen Ausbreiten der Kontaktflächen des Tropfens und des Schmelzbades 202. $v_{F\_2}$ kann beispielsweise im Bereich 15 - 60 m/min. liegen.

Alternativ kann die Fördergeschwindigkeit $v_F(t)$ in der Phase IVb auch erhöht werden, beispielsweise auf einen vorgegebene höheren Geschwindigkeitswert erhöht werden. Auf diese Weise kann der Kurzschlusseintritt aktiv mechanisch eingeleitet werden. Zudem führt die Erhöhung der Fördergeschwindigkeit auch zu einer höheren Endgeschwindigkeit des Tropfens, wodurch ein sicheres Verbinden des Tropfens mit dem Schmelzbad gewährleistet wird, so dass ein schnelles Ausbreiten der Kontaktfläche von Tropfen und Schmelzbad erreicht wird.

Durch die Reduzierung bzw. Erhöhung der Fördergeschwindigkeit $v_F(t)$ in Phase IVb lässt sich dadurch die Dynamik und Form der flüssigen Phase an der Drahtelektrode bzw. des Tropfens beeinflussen, um positiv auf die nachfolgende Kurzschlussphase einzuwirken. Insbesondere kann durch diese Maßnahmen eine hohe Geschwindigkeit der flüssigen Phase erreicht werden.

Die Steuereinrichtung 114 kann dazu eingerichtet sein, den Zeitpunkt $t_6$, an dem der Wert x(t) für die aktuelle Position den Abstandswert $x_D$ erreicht bzw. überschreitet, vorauszuberechnen und die Änderung der Fördergeschwindigkeit $v_F(t)$, d.h. die Beschleunigung des Drahtendes 152, in der Phase IVa derart anpassen, dass der Zeitpunkt $t_6$ in einem vorgegebenen Bereich, zum Beispiel bezogen auf die Kurzschlussauflösung ($t_3$), liegt. Auf diese Weise kann zum Beispiel die Dauer der Lichtbogenphase LBP weitgehend konstant gehalten werden. Weiterhin kann auf diese Weise die kinetische Energie gesteuert werden, die zum Einleiten des Kurzschlusses eingesetzt wird.

Zusätzlich oder alternativ zur Fördergeschwindigkeit $v_F(t)$ kann die Steuereinrichtung 114 nach Erreichen bzw. Unterschreiten des Abstandswert $x_D$ auch den Schweißstrom I(t) ändern. Auf diese Weise kann die Stromstärke des Schweißstroms auf die Drahtposition und/oder auf die Drahtbeschleunigung, d.h. auf die Änderungsrate von $v_F(t)$, also auf $dv_F(t)/dt$, synchronisiert werden. Beispielsweise kann bei Erreichen bzw. Unterschreiten des Abstandswerts $x_D$ das Beenden eines laufenden Aufschmelzstrompulses eingeleitet werden, um eine vorzeitige Tropfenablösung zu verhindern.

Die Phase IV bzw. IVb endet mit dem nächsten Kurzschlusseintritt (Zeitpunkt $t_7$). Mit dem Ende der Phase IV bzw. IVb endet auch der Schweißzyklus und es folgt der nächste Schweißzyklus beginnend mit Phase I (s.o.). Da das Abschmelzen der Drahtelektrode 152 bei der Bestimmung von x(t) vernachlässigt wird, so dass die tatsächliche Position des Drahtendes kurz vor dem Kurzschlusseintritt von dem berechneten Wert x(t) abweicht, und da es weiter im Moment des Kurzschlusses zu einem Tropfenübergang kommt, wodurch die Drahtelektrode weiter verkürzt wird, tritt der Kurzschluss vorliegend erst bei einer Position $x(t_7) < 0$ mm ein. Indem die Steuereinrichtung den Kurzschlusseintritt $t_7$ als neue Referenzposition verwendet und beispielsweise $x(t_7) = 0$ mm setzt, stellt x(t) im nachfolgenden Schweißzyklus wieder einen recht guten Wert für die Drahtposition dar.

Wird $v_F(t)$ in der Phase IVb erhöht, führt dies zu einer Verschiebung der flüssigen Phase aufwärts an der Drahtelektrode. Auf diese Weise kann ein hoher Aufschmelzstrom eingesetzt werden, ohne dass sich ein Tropfen von der Drahtelektrode ablöst. Die Verlagerung der flüssigen Phase ermöglicht somit die Verwendung höherer Lichtbogenströme. Auf diese Weise lassen sich die Wärmeführung ins Schmelzbad anpassen und unter anderem höhere Abschmelzleistungen erzielen.

Zusätzlich kann die Stromform des Aufschmelzstrompulses derart verändert werden, dass abhängig von dem Wert für die aktuelle Drahtposition positionsabhängige Einflüsse kompensiert werden können.

Weiter kann die Steuereinrichtung 114 den Schweißstrom I(t) während der Kurzschlussphase abhängig vom Wert für die aktuelle Position der Drahtelektrode ändern. Zum Beispiel kann auf diese Weise der Kurzschlussstrom abhängig von der Position das Drahtes im Schmelzbad geregelt werden, um die Pinchkräfte am Draht zu beeinflussen.

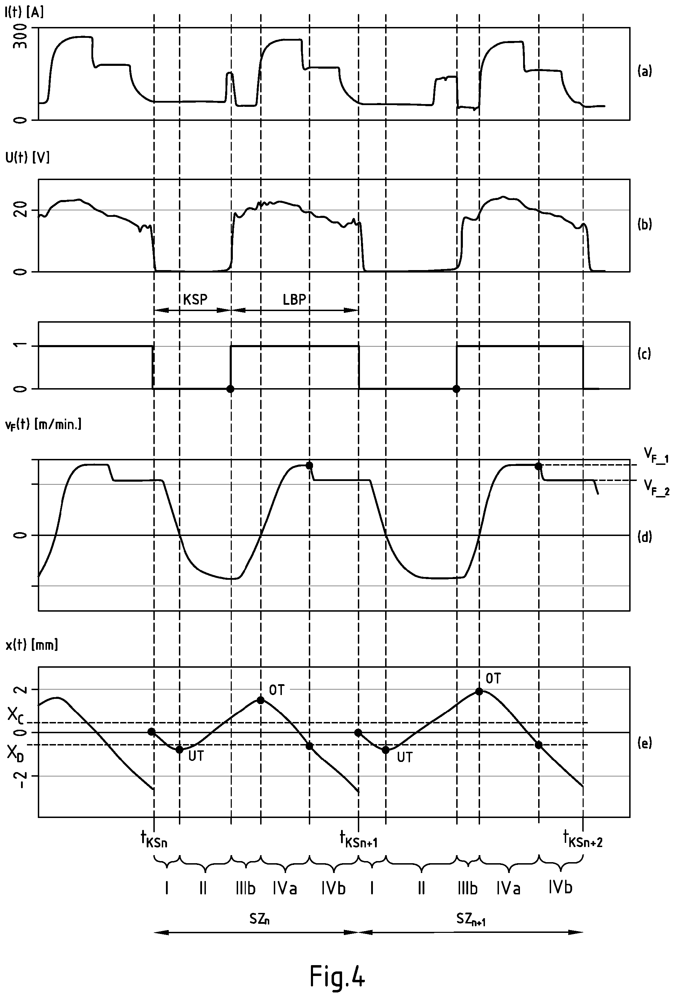

Fig. 4 zeigt weitere Schweißzyklen $SZ_n$, $SZ_{n+1}$ des Schweißverfahrens aus Fig. 3. Die Diagramme (a) bis (e) in Fig. 4 entsprechen den Diagrammen (a) bis (e) aus Fig. 3. Die Steuereinrichtung 114 steuert das Verfahren weiterhin wie oben zu Fig. 3 beschrieben. Die Phasen und ausgezeichneten Punkte in Fig. 4 sind mit denselben Bezeichnungen versehen wie die entsprechenden Phasen und Punkte in Fig. 3.

Wie bereits zu Fig. 3 beschrieben, setzt die Steuereinrichtung 114 bei jedem Kurzschlusseintritt (in Fig. 4 zum Zeitpunkt $t_{KSn}$, $t_{KSn+1}$ bzw. $t_{KSn+2}$) die aktuelle Drahtposition als neue Referenzposition fest und den Wert x(t) zum jeweiligen Kurzschlusszeitpunkt $t_{KSn}$, $t_{KSn+1}$ bzw. $t_{KSn+2}$ gleich 0 mm. Auf diese Weise wird x(t) zu Beginn jedes Schweißzyklus auf die Position der Schweißbadoberfläche zum Kurzschlusszeitpunkt kalibriert und justiert. Wie zuvor zu Fig. 3 ausgeführt, kommt es durch das bei der Bestimmung von x(t) nicht berücksichtigte Abschmelzen der Drahtelektrode und den Tropfenübergang im Kurzschluss über den Verlauf des Schweißzyklus jeweils zu Abweichungen zwischen x(t) und der tatsächlichen Position des Drahtendes zur Schweißbadoberfläche. Daher zeigt x(t) in Fig.4 jeweils einen Sprung zum Kurzschlusseintritt, da die Steuereinrichtung $x(t_{KS})$ auf Null setzt.

In Fig. 4 ist die positionsabhängige Steuerung der Fördergeschwindigkeit $v_F(t)$ in Phase IV gut zu erkennen. Wie oben zu Phase IV erläutert, vergleicht die Steuereinrichtung 114 ab dem oberen Totpunkt OT den Wert x(t) für die aktuelle Position der Drahtelektrode 152 mit einem vorgegebenen Abstandswert $x_D$ und ändert, insbesondere reduziert, die Fördergeschwindigkeit $v_F(t)$, wenn x(t) den Abstandswert $x_D$ unterschreitet. Wie der Vergleich der Schweißzyklen $SZ_n$ und $SZ_{n+1}$ in Fig. 4 zeigt, wird auf diese Weise erreicht, dass die Fördergeschwindigkeit $v_F(t)$ unabhängig von der Höhe des OT in etwa gleichbleibendem Abstand zum nachfolgenden Kurzschlusseintritt reduziert wird. Bei dem gegenüber dem OT des Schweißzyklus $SZ_n$ höheren OT des Schweißzyklus $SZ_{n+1}$ bleibt die Fördergeschwindigkeit durch die positionsabhängige Steuerung insbesondere länger konstant, bevor sie abgesenkt wird. Auf diese Weise wird ein gleichmäßiger Schweißprozess erreicht.

Zu Beginn der Phase III ist die vorgegebene Position xc bei den Schweißzyklen $SZ_n$ und $SZ_{n+1}$ bereits erreicht bzw. überschritten. Daher geht die Steuereinrichtung 114 nach Kurzschlussauflösung unmittelbar in die Phase IIIb über.

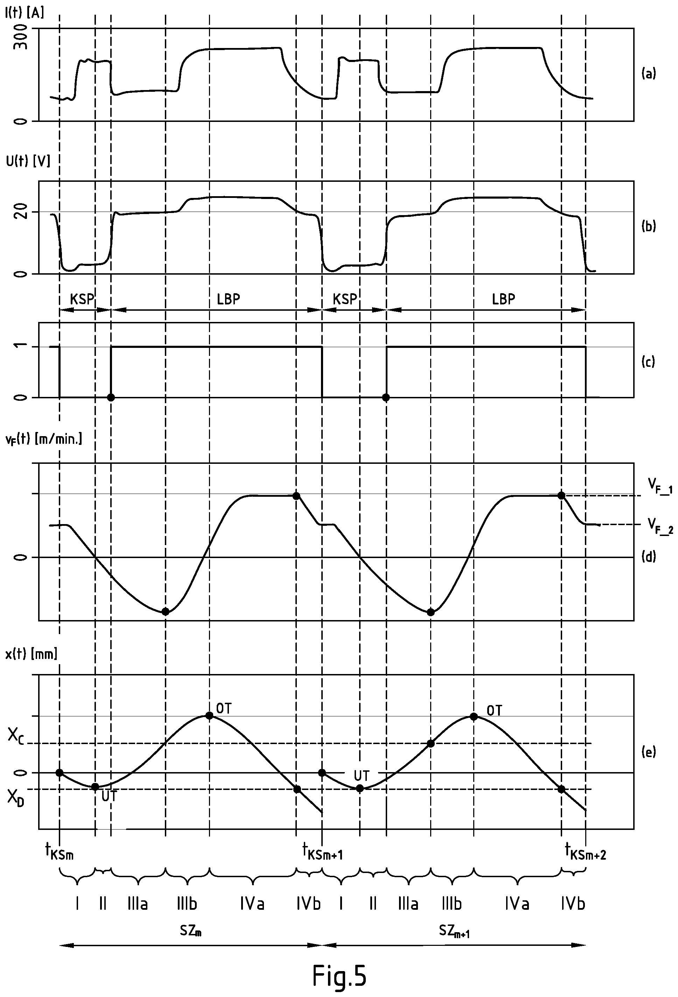

Fig. 5 zeigt weitere Schweißzyklen $SZ_m$, $SZ_{m+1}$ des Schweißverfahrens aus Fig. 3 bzw. Fig. 4. Die Diagramme (a) bis (e) in Fig. 5 entsprechen den Diagrammen (a) bis (e) aus Fig. 3. Die Steuereinrichtung 114 steuert das Verfahren weiterhin wie oben zu Fig. 3 beschrieben. Die Phasen und ausgezeichneten Punkte in Fig. 4 sind mit denselben Bezeichnungen versehen wie die entsprechenden Phasen und Punkte in Fig. 3.

Wie zuvor beschrieben setzt die Steuereinrichtung 114 bei jedem Kurzschlusseintritt (in Fig. 5 zum Zeitpunkt $t_{KSm}$, $t_{KSm+1}$ bzw. $t_{KSm+2}$) die aktuelle Drahtposition als neue Referenzposition fest und den Wert x(t) zum jeweiligen Kurzschlusszeitpunkt $t_{KSm}$, $t_{KSm+1}$ bzw. $t_{KSm+2}$ gleich 0 mm.

In Fig. 5 ist die positionsabhängige Steuerung der Fördergeschwindigkeit $v_F(t)$ in Phase III gut zu erkennen. Wie oben zu Fig. 3 beschrieben, vergleicht die Steuereinrichtung 114 in Phase III ab Kurzschlussauflösung den Wert $x(t)$ für die aktuelle Position der Drahtelektrode 152 mit einem vorgegebenen Abstandswert xc und reduziert die Fördergeschwindigkeit $v_F(t)$ betragsmäßig, wenn $x(t)$ den Abstandswert xc überschreitet. Bei den Schweißzyklen $SZ_m$ und $SZ_{m+1}$ in Fig. 5 ist die Kurzschlussphase jeweils recht kurz. Dies führt dazu, dass der vorgegebene Abstandswert xc (verglichen mit den Schweißzyklen $SZ_n$ und $SZ_{n+1}$ in Fig. 4) erst nach längerer Zeitdauer erreicht wird und sich die betragsmäßige Reduzierung der Fördergeschwindigkeit $v_F(t)$ entsprechend verzögert. Wie der Vergleich der Schweißzyklen $SZ_m$ und $SZ_{m+1}$ in Fig. 5 zeigt, ist diese Zeitdauer bei $SZ_m$ und $SZ_{m+1}$ unterschiedlich lang, da die Drahtelektrode beim Schweißzyklus $SZ_m$ zum Zeitpunkt der Kurzschlussauflösung noch einen längeren Weg zurücklegen muss als beim Schweißzyklus $SZ_{m+1}$, um die vorgegebene Position $x_c$ zu erreichen.

In Fig. 4 und 5 ist weiter die positionsabhängige Steuerung des Schweißstroms $I(t)$ zu erkennen. Wie oben zu Fig. 3 beschrieben, löst die Steuereinrichtung 114 in Phase III nach Ablauf einer vorgegebenen Zeitdauer seit Erreichen bzw. Überschreiten des Abstandswert xc durch $x(t)$ einen Aufschmelzstrompuls zum Aufschmelzen der Drahtelektrode aus und bewirkt in Phase IV nach Ablauf einer vorgegebenen Zeitdauer seit Erreichen bzw. Unterschreiten des Abstandswerts $x_D$ ein Beenden des Aufschmelzstrompulses, um eine vorzeitige Tropfenablösung zu verhindern.

Bei der Schweißvorrichtung 100 in Fig. 1 handelt es sich vorliegend um eine Schweißvorrichtung zum manuellen Schweißen. Die hier beschriebene Lehre ist jedoch nicht auf Schweißvorrichtungen zum manuellen Schweißen beschränkt; vielmehr kann es sich bei der Schweißvorrichtung auch um eine Schweißvorrichtung zum automatisierten Schweißen handeln, beispielsweise unter Verwendung eines Schweißroboters. Gleiches gilt für die beschriebene Steuereinrichtung und das beschriebene Verfahren.

Bezugszeichenliste:

| | |
|---|---|
| 100 | Schweißvorrichtung |
| 110 | Schweißstromquelle |
| 112 | Leistungsteil |
| 114 | Steuereinrichtung |
| 115 | Mikroprozessor |
| 116 | Speicher |
| 118 | elektrischer Ausgang |
| 119 | Leitung |
| 122 | Nutzerschnittstelle |
| 150 | Drahtvorschubgerät |
| 152 | Drahtelektrode |
| 154 | Drahtelektrodenvorrat |
| 156 | primäre Drahtelektrodenfördereinrichtung |
| 160 | Steuereinrichtung |
| 162 | Eingang |
| 164 | Einlass |
| 165 | Gasleitung |
| 166 | Schutzgasquelle |
| 168 | Brenneranschluss |
| 169 | Ventil |
| 180 | Schweißbrenner |
| 182 | Brennerteil |
| 184 | Schlauchpaket |
| 185 | Drahtführung |
| 186 | sekundäre Drahtelektrodenfördereinrichtung |
| 187 | Fördergeschwindigkeits- und/oder Förderwegerfassungseinrichtung |
| 188 | Brennertaster |
| 190 | Drahtspeicher |
| 192 | federgelagerte Rolle |
| 200 | Werkstück |
| 202 | Schmelzbad |

**Patentansprüche**

1. Verfahren zum Lichtbogenschweißen mit abschmelzender Drahtelektrode (152) umfassend eine Mehrzahl von Schweißzyklen (SZ), die jeweils eine Kurzschlussphase (KSP) und eine Lichtbogenphase (LBP) aufweisen,

   - bei dem die Drahtelektrode (152) mit einer variablen Fördergeschwindigkeit ($v_F$(t)) gefördert wird und
   - bei dem die Fördergeschwindigkeit ($v_F$(t)) und/oder der Schweißstrom (I(t)) abhängig von einem Wert (x(t)) für die aktuelle Position der Drahtelektrode (152) geändert wird, insbesondere geändert wird, wenn der Wert (x(t)) für die aktuelle Position der Drahtelektrode (152) eine vorgegebene Position (xc, $x_D$) erreicht, insbesondere über- oder unterschreitet.

2. Verfahren nach Anspruch 1,
   **dadurch gekennzeichnet, dass** die Lichtbogenphase (LBP) eine Lichtbogen-Annährungsphase (LB-AP) aufweist, in der die Drahtelektrode (152) zu einem Schmelzbad (202) hin gefördert wird, und während der Lichtbogen-Annäherungsphase (LB-AP) die Fördergeschwindigkeit ($v_F$(t)) und/oder der Schweißstrom (I(t)) abhängig von einem Wert (x(t)) für die aktuelle Position der Drahtelektrode (152) geändert wird.

3. Verfahren nach Anspruch 1 oder 2,
   **dadurch gekennzeichnet, dass** der Wert (x(t)) für die aktuelle Position der Drahtelektrode (152) abhängig von einer Referenzposition der Drahtelektrode (152) und der Fördergeschwindigkeit ($v_F$(t)) oder einem Förderweg ($s_F$(t)) ermittelt wird.

4. Verfahren nach einem der Ansprüche 1 bis 3,
   **dadurch gekennzeichnet, dass** die Referenzposition abhängig von der Position der Drahtelektrode (152) zum Kurzschlusseintritt und/oder zur Kurzschlussauflösung des aktuellen und/oder eines früheren Schweißzyklus (SZ) bestimmt wird.

5. Verfahren nach einem der Ansprüche 1 bis 4,
   **dadurch gekennzeichnet, dass** die Kurzschlussphase (KSP) eine Kurzschluss-Entfernungsphase (KS-EP) aufweist, in der die Drahtelektrode (152) vom Schmelzbad (202) weg gefördert wird, wobei die Fördergeschwindigkeit ($v_F$(t)) der Drahtelektrode (152) während des Verlaufs der Kurzschluss-Entfernungsphase (KS-EP) betragsmäßig erhöht wird, vorzugsweise mit abnehmender Beschleunigung.

6. Verfahren nach Anspruch 5,
   **dadurch gekennzeichnet, dass** die Fördergeschwindigkeit ($v_F$(t)) der Drahtelektrode (152) während des Verlaufs der Kurzschluss-Entfernungsphase (KS-EP) betragsmäßig bis zum Ablauf einer vorgegebenen Zeit seit Kurzschlusseintritt oder, wenn vor Ablauf der vorgegebenen Zeit eine Kurzschlussauflösung erfolgt, bis zur Kurzschlussauflösung erhöht wird.

7. Verfahren nach einem der Ansprüche 1 bis 6,
   **dadurch gekennzeichnet, dass** die Lichtbogenphase (LBP) eine Lichtbogen-Entfernungsphase (LB-EP) aufweist, in der die Drahtelektrode (152) vom Schmelzbad (202) weg gefördert wird, wobei die Fördergeschwindigkeit ($v_F$(t)) der Drahtelektrode (152) während des Verlaufs der Lichtbogen-Entfernungsphase (LB-EP) bis zur Richtungsumkehr betragsmäßig reduziert wird, vorzugsweise erst ab einem von dem Wert (x(t)) für die aktuelle Position der Drahtelektrode (152) abhängigen Zeitpunkt.

8. Verfahren nach Anspruch 7,
   **dadurch gekennzeichnet, dass** die Rate, mit der die Fördergeschwindigkeit ($v_F$(t)) der Drahtelektrode (152) während des Verlaufs der Lichtbogen-Entfernungsphase (LB-EP) bis zur Richtungsumkehr betragsmäßig reduziert wird, derart eingestellt wird, dass die Richtungsumkehr nach einer vorgegebenen Zeitdauer seit Kurzschlussauflösung erreicht wird.

9. Verfahren nach Anspruch 7 oder 8,
   **dadurch gekennzeichnet, dass** die Fördergeschwindigkeit ($v_F$(t)) der Drahtelektrode (152) im Bereich der Richtungsumkehr für eine vorgegebene Zeitdauer betragsmäßig kleiner oder gleich einem vorgegeben Geschwindigkeitswert gehalten wird.

10. Verfahren nach einem der Ansprüche 1 bis 9,

**dadurch gekennzeichnet, dass** das Verfahren eine Mehrzahl von Pulsprozess-Schweißzyklen ohne Kurzschlussphase (KSP) aufweist, wobei vorzugsweise ein Parameter eines auf einen Schweißzyklus (SZ) mit Kurzschlussphase (KSP) folgenden Pulsprozess-Schweißzyklus abhängig von dem Wert (x(t)) für die aktuelle Position der Drahtelektrode (152) eingestellt wird.

11. Steuereinrichtung (114) für eine Schweißvorrichtung (100) mit mindestens einem Mikroprozessor (115) und mindestens einem Speicher (116), der Befehle enthält, deren Ausführung auf dem mindestens einen Mikroprozessor die Durchführung eines Lichtbogenschweißprozesses gemäß einem Verfahren nach einem der Ansprüche 1 bis 10 bewirkt.

12. Schweißvorrichtung (100) aufweisend eine Steuereinrichtung (114) nach Anspruch 11.

Fig.1

EP 4 703 077 A1

Fig.2

EP 4 703 077 A1

Fig.3

Fig.4

Fig.5

Europäisches
Patentamt

European
Patent Office

Office européen
des brevets

**EUROPÄISCHER RECHERCHENBERICHT**

Nummer der Anmeldung

EP 24 19 7566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/031293 A1 (FURUYAMA YUYA [JP] ET AL) 4. Februar 2021 (2021-02-04) * Absätze [0064], [0066]; Anspruch 1; Abbildungen 1-3 * ----- | 1,2,5-12 | INV. B23K9/095 B23K9/12 B23K9/173 |
| X | US 2022/032388 A1 (NAKATSUKASA SHOGO [JP] ET AL) 3. Februar 2022 (2022-02-03) * Absätze [0081] - [0083], [0095] - [0100]; Anspruch 16 * ----- | 1-6, 10-12 | |
| X | US 2012/074114 A1 (KAWAMOTO ATSUHIRO [JP] ET AL) 29. März 2012 (2012-03-29) * Absätze [0019], [0035] - [0040]; Abbildungen 1-4 * ----- | 1,2,5-12 | |

**RECHERCHIERTE SACHGEBIETE (IPC)**

B23K

Der vorliegende Recherchenbericht wurde für alle Patentansprüche erstellt

| Recherchenort | Abschlußdatum der Recherche | Prüfer |
|---|---|---|
| München | 6. Februar 2025 | Kramer, Ellen |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2025

| Im Recherchenbericht angeführtes Patentdokument | Datum der Veröffentlichung | Mitglied(er) der Patentfamilie | Datum der Veröffentlichung |
|---|---|---|---|
| US 2021031293 A1 | 04-02-2021 | CN 111989182 A | 24-11-2020 |
| | | EP 3782756 A1 | 24-02-2021 |
| | | JP 7365598 B2 | 20-10-2023 |
| | | JP WO2019203162 A1 | 13-05-2021 |
| | | US 2021031293 A1 | 04-02-2021 |
| | | WO 2019203162 A1 | 24-10-2019 |
| US 2022032388 A1 | 03-02-2022 | CN 112770859 A | 07-05-2021 |
| | | EP 3858530 A1 | 04-08-2021 |
| | | JP 7041034 B2 | 23-03-2022 |
| | | JP 2020049506 A | 02-04-2020 |
| | | KR 20210039482 A | 09-04-2021 |
| | | US 2022032388 A1 | 03-02-2022 |
| | | WO 2020067074 A1 | 02-04-2020 |
| US 2012074114 A1 | 29-03-2012 | CN 102149501 A | 10-08-2011 |
| | | EP 2292364 A1 | 09-03-2011 |
| | | JP 4807474 B2 | 02-11-2011 |
| | | JP WO2010146844 A1 | 29-11-2012 |
| | | US 2012074114 A1 | 29-03-2012 |
| | | US 2013082040 A1 | 04-04-2013 |
| | | US 2013082041 A1 | 04-04-2013 |
| | | WO 2010146844 A1 | 23-12-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1563938 B1
- EP 3509784 B2